**Europäisches Patentamt**

**European Patent Office**

**Office européen des brevets**

(11) Veröffentlichungsnummer: **0 484 797 A2**

# EUROPÄISCHE PATENTANMELDUNG

(21) Anmeldenummer: **91118394.5**

(22) Anmeldetag: **29.10.91**

(51) Int. Cl.⁵: **B29C 59/04**, B32B 27/00

(30) Priorität: **07.11.90 DE 9015306 U**

(43) Veröffentlichungstag der Anmeldung:
**13.05.92 Patentblatt 92/20**

(84) Benannte Vertragsstaaten:
**AT BE CH DE DK ES FR GB IT LI NL SE**

(71) Anmelder: **RÖHM GMBH**
**Kirschenallee**
**W-6100 Darmstadt(DE)**

(72) Erfinder: **Gross, Heinz, Dr.-Ing.**
**Ringstrasse 137**
**W-6101 Rossdorf 1(DE)**
Erfinder: **Hofmann, Klaus**
**Hahlgartenstrasse 69**
**W-6103 Griesheim(DE)**
Erfinder: **Kaube, Peter**
**Drosselweg 8**
**W-6101 Rossdorf 1(DE)**
Erfinder: **Siol, Werner, Dr.**
**Goerdelerweg 17**
**W-6100 Darmstadt-Eberstadt(DE)**
Erfinder: **Vetter, Heinz, Dr.-Ing.**
**Taunusstrasse 92**
**W-6101 Rossdorf 1(DE)**

(54) **Extrudierte Kunststoffbahn mit walzengeglätteter Oberfläche.**

(57) Eine extrudierte Bahn aus thermoplastischem Kunststoff mit walzengeglätteter Oberfläche, enthaltend eine Kernschicht K aus thermoplastischem Kunststoff mit einem Gehalt an heterogen verteilten unschmelzbaren oder oberhalb der Schmelztemperatur des thermoplastischen Kunststoffs schmelzenden Körpern von einer Größe, die geringer als die Dicke der Kernschicht ist, und wenigstens eine an die Kernschicht angrenzende freiliegende Deckschicht D aus einem transparenten, homogenen, mit dem Kunststoff der Kernschicht verträglichen thermoplastischen Kunststoff, deren freiliegende Oberfläche walzengeglättet ist, behält ihren Glanz auch bei einer reckenden thermoplastischen Umformumg, beispielsweise zu Wasch- oder Duschbecken. Bahnen mit einer weiteren Deckschicht M aus thermoplastischem Kunststoff, die durch einen hohen Füllstoffgehalt mattiert ist, gestatten die Herstellung umgeformter Gegenstände mit einer matten und einer glänzenden Oberflächenseite.

Fig. 1

Die Erfindung betrifft eine extrudierte Bahn aus thermoplastischem Kunststoff mit walzengeglätteter Oberfläche, enthaltend eine Schicht aus thermoplastischem Kunststoff mit einem Gehalt an heterogen verteilten unschmelzbaren oder oberhalb der Schmelztemperatur des thermoplastischen Kunststoffs schmelzenden Körpern, z.B. Pigmentpartikeln.

Stand der Technik

Es ist allgemein bekannt, Bahnen aus thermoplastischem Kunststoff mit einem Gehalt an Pigmentpartikeln zu extrudieren und deren Oberfläche in einem dicht hinter der Extrusionsdüse angeordneten Walzenglättwerk zu glätten. Dabei werden die Oberflächen der Bahn durch die Berührung mit den gekühlten Glättwalzen rasch unter die Erweichungstemperatur abgekühlt, wodurch ihre Oberflächenbeschaffenheit festgelegt wird. Es versteht sich, daß man Glättwalzen mit einer Oberflächenqualität verwendet, die mindestens derjenigen der erwünschten Oberflächenqualität der erzeugten Kunststoffbahn entspricht.

Es wurde festgestellt, daß sich die Qualität der Oberfläche von walzengeglätteten pigmentierten Kunststoffbahnen deutlich verschlechtert, wenn sie im Zuge der Verarbeitung auf oder über die Erweichungstemperatur erhitzt wird, insbesondere wenn sie in diesem Zustand gebogen oder reckend verformt wird. Vor allem der Glanz wird deutlich vermindert. Dagegen behält die Oberfläche von unpigmentierten extrudierten Kunststoffbahnen beim Erhitzen und gegebenenfalls Verformen ihren Glanz weitgehend oder vollständig. Demnach wird die Oberflächenqualität durch die Anwesenheit der Pigmentpartikel beeinträchtigt.

Aus der deutschen Patentschrift 1 554 781 sind extrudierte Kunststoffplatten aus einem Gemisch zweier Kunststoffe mit stark unterschiedlichen Schmelzviskositäten bekannt. Der Kunststoff mit hoher Schmelzviskosität ist z.B. ein vernetztes Perlpolymerisat, das in einem Anteil von 10 % der extrudierten Kunststoffe vorliegt. Da die Kunststoffperlen unter den Extrusionsbedingungen nicht schmelzen, heben sich die nahe an der Oberfläche befindlichen Perlen aus der Oberfläche hervor, wenn der Schmelzestrang aus der Extrusiondüse austritt. Dadurch läßt sich nach dem Erstarren eine feine gleichmäßige Mattstruktur der Oberfläche erreichen. Bei der nachträglichen thermoelastischen Verformung von extrudierten Platten bleibt die matte Oberfläche erhalten. Dieser Effekt ist erwünscht, wenn mattierte Kunststoffkörper erzeugt werden sollen. Dagegen lassen sich Formkörper, die auf einer Oberfläche matt und auf der anderen glänzend sind, auf diese Weise nicht in befriedigender Weise herstellen. Auch wenn man versucht, eine glänzende Oberfläche durch Abkühlung der thermoelastisch umgeformten Platte in Berührung mit einem geglätteten Formwerkzeug zu erhalten, bleibt die Mattstruktur im wesentlichen bestehen. Durch spätere Einwirkung hoher Temperaturen oder von Lösungs- oder Weichmachungsmitteln auf die geglättete Oberfläche tritt die Mattstruktur umso stärker hervor.

Aufgabe und Lösung

Der Erfindung liegt die Aufgabe zugrunde, eine extrudierte Bahn aus thermoplastischem Kunststoff mit walzengeglätteter Oberfläche mit einem Gehalt an heterogen verteilten unschmelzbaren oder oberhalb der Schmelztemperatur des thermoplastischen Kunststoffs schmelzenden Körpern von einer Größe, die geringer als die Dicke der Kernschicht ist, herzustellen, die wenigstens auf einer Seite einen verbesserten Glanz aufweist und diesen auch bei einer nachfolgenden thermoelastischen Umformung beibehält.

Diese Aufgabe wird durch die extrudierte Bahn der Erfindung gelöst. Erfindungsgemäß enthält die extrudierte Bahn wenigstens eine an die Kernschicht angrenzende freiliegende Deckschicht aus einem transparenten, homogenen, mit dem Kunststoff der Kernschicht verträglichen thermoplastischen Kunststoff, deren freiliegende Oberfläche walzengeglättet ist.

Die Homogenität der Deckschicht verhindert die Bildung von Oberflächenstörungen während der Extrusion oder bei der thermoelastischen Umformung oder bei späteren thermischen oder quellenden Einwirkungen auf die Oberfläche.

Aufbau der extrudierten Bahn

Die erfindungsgemäße Bahn wird durch Koextrusion der Kernschicht K mit der Deckschicht D erzeugt. Das setzt voraus, daß beide Kunststoffe unter den gleichen Bedingungen thermoplastisch verarbeitbar sind und sich bei der Koextrusion haftend verbinden. Diese Voraussetzung ist jedenfalls dann erfüllt, wenn die Kernschicht und die Deckschicht den gleichen Basiskunststoff enthalten. Die beteiligten Kunststoffe können sich jedoch auch unterscheiden, sofern sie miteinander verträglich sind. Das ist der Fall, wenn sie aus gleichen chemischen Struktureinheiten aufgebaut sind und sich z.B. durch den Polymerisationsgrad oder den Verzweigungsgrad unterscheiden. Im manchen Fällen haften auch Kunststoffe, die sonst nicht miteinander mischbar sind, in ausreichender Weise aneinander; dies gilt z.B. für Polymethylmethacrylat und Bisphenol-A-Polycarbonat oder Polymethylmethacrylat und Polystyrol. Wie unten erläutert wird, können erfindungsgemäß auch drei oder mehr Kunststoffe koextrudiert sein; für sie gilt sinngemäß die Forderung nach ausreichender Haftung der jeweils aneinander grenzenden Schichten. Im Interesse der Wiederverwendbarkeit von Abfällen des erfindungsgemäßen Materials ist es besonders vorteilhaft, wenn alle beteiligten Kunststoffe miteinander mischbar und verträglich sind.

Als Werkstoffe für die Kern- und die Deckschicht eignen sich bei Raumtemperatur steife bis harte thermoplastische Kunststoffe. Ihre Glasübergangstemperatur liegt vorzugsweise zwischen 70 und 200ºC. In der Regel wird der Kunststoff für die Kernschicht nach den Erfordernissen an die mechanische Festigkeit, wie Zug- und Biegefestigkeit, Schlagzähigkeit usw. gewählt, während für die Wahl der Deckschicht die Härte, Kratzfestigkeit, Witterungsbeständigkeit, Chemikalienbeständigkeit, Benetzbarkeit, Verklebbarkeit, Bedruckbarkeit oder UV-Beständigkeit eine größere Rolle spielen. Die Schmelzviskositäten der Kunststoffe sollten bei einer geeigneten Verarbeitungstemperatur und unter den bei der Verarbeitung auftretenden Scherbedingungen im Bereich von 100 bis 4000 Pas liegen. Geeignete thermplastische Kunststoffe sind z.B. Polyacrylate, wie Polymethylmethacrylat oder Mischpolymerisate des Methylmethacrylats mit Alkylacrylaten, Acrylnitril, Styrol, Maleinsäureanhydrid oder anderen damit mischpolymerisierbaren äthylenisch ungesättigten Monomeren, wobei der Anteil des Methylmethacrylats vorzugsweise 30 bis 100 Gew.-% ausmacht, ferner Polystyrol, ABS-Kunststoffe, Polyvinylchlorid, Polyolefine, thermoplastische Polyester, Polycarbonate und andere thermoplastische Konstruktions-Kunststoffe (engineering plastics).

Bevorzugte Werkstoffe, aus denen alle Schichten der extrudierten Bahnen bestehen können, sind Polymethylmethacrylat-Formmassen. Sie können aus Homopolymerisaten des Methylmethacrylats oder aus dessen Copolymerisaten mit etwa 1 bis 15 Gew.-% an niederen Alkylacrylaten bestehen, eine reduzierte Viskosität im Bereich von etwa 30 bis 120 ml/g (gemessen in Chloroform) haben und übliche Zusätze, wie homogen verteilte Farbstoffe oder UV-Absorber, Gleitmittel oder Stabilisatoren, enthalten.

Üblicherweise bildet die Kernschicht die tragende Schicht der Bahn und hat vorzugsweise eine Dicke von 0,5 bis 20 mm. Sie macht z.B. 50 bis über 99 % der Gesamtdicke aus. Die Deckschicht ist in der Regel dünner als die Kernschicht und hat eine Dicke von wenigstens 10, vorzugsweise 50 Mikrometer bis 1 mm. Sie bildet auf jeden Fall eine freiliegende Schicht an der Oberfläche der extrudierten Bahn.

Die Kernschicht enthält in der homogenen Matrix aus thermoplastischem Kunststoff heterogen verteilte Körper aus einem anderen Material. Es handelt sich um Zusätze, die bei der Temperatur der thermoplastischen Verarbeitung nicht schmelzen, sich mit der Kunststoffmatrix nicht homogen vermischen und bei der thermoplastischen Verarbeitung ihre Größe oder Gestalt nicht verändern.

Die Körper können eine mehr oder weniger gleichmäßige Größe haben, vorzugsweise im Bereich von 1 bis 150 Mikrometer. Jedoch sollen auch die größten Körper nicht größer als die Dicke der Kernschicht sein. Die Menge des Zusatzes richtet sich nach der damit angestrebten Wirkung. Sie kann demgemäß innerhalb weiter Grenzen liegen und z.B. 0,01 bis 70 Gew.-%, bezogen auf das Gewicht des Kernschichtmaterials, betragen.

Die Funktion der heterogen verteilten Körper kann verschiedenartig sein. Es kann sich z.B. um organische oder anorganische Pigmente oder Füllstoffe handeln. Auch mineralische oder organische Fasern mit Längen von 0,1 bis 10 mm kommen in Betracht. Diese Zusätze dienen in der Regel ausschließlich zur Verbesserung der mechanischen Eigenschaften oder des Aussehens, während ein Einfluß auf die Beschaffenheit der Oberfläche eher unerwünscht ist. Die von ihnen verursachte Rauheit oder Glanzminderung wird durch die erfindungsgemäß aufgebrachte Deckschicht ausgeschlossen. Da für die Deckschicht transparentes Kunststoffmaterial verwendet wird, kommt die Farbwirkung des Pigments in der Kernschicht unvermindert zum Ausdruck. Je nach den Erfordernissen der beabsichtigten Anwendung kann auf einer oder auf beiden Seiten der Kernschicht eine Deckschicht angeordnet sein.

Wenn mit dem Zusatz eine Mattierung einer Oberfläche der extrudierten Bahn bezweckt wird, sind Teilchen aus unschmelzbaren Kunststoffen geeignet. Sie können eine mittlere Teilchengröße von 0,001 bis 0,2 mm haben und sind zweckmäßig in einer Menge von 0,01 bis 70 Gew.-% enthalten. Sie können aus einem anderen Kunststoff oder aus dem gleichen, jedoch vernetzten Kunststoff wie das Basismaterial der Kernschicht bestehen. Geeignete vernetzte Kunststoffteilchen sind nach bekannten Verfahren durch Polymerisation in Substanz und anschließendes Mahlen auf die gewünschte Teilchengröße, oder durch Emulsions- oder Suspensionspolymerisation zugänglich. Unvernetzte Kunststoffteilchen haben die gleiche Wirkung, wenn ihr Polymerisations- und/oder Verzweigungsgrad so hoch ist, daß sie unter den Koextrusionsbedingungen nicht schmelzen; bei einem Molekulargewicht des Polymeren von mindestens 1 Million ist diese Voraussetzung in der Regel erfüllt.

Wird ausschließlich eine Oberflächenmattierung angestrebt, so muß der optische Brechungsindex des zugesetzten Kunststoffes mit dem des Basiskunststoffes möglichst genau übereinstimmen. Es ist vorteilhaft, wenn die Kunststoffe wenigstens so gut miteinander verträglich sind, daß keine optischen Phasengrenzen auftreten. Diese Bedingung ist erfüllt, wenn die heterogen verteilten Körper aus dem gleichen Basiskunststoff wie die Kernschicht bestehen, aber infolge von Vernetzung oder eines extrem hohen Polymerisationgrades nicht schmelzbar sind.

Weicht der Brechungsindex der verteilten Körper um einen Betrag von wenigstens 0,002 von dem des umgebenden Kunststoffes ab, so wirkt die Kernschicht insgesamt trüb, was gegebenenfalls ein erwünschter Effekt sein kann. In diesem Fall ist Verträglichkeit zwischen dem Basiskunststoff und dem Zusatz nicht erforderlich.

Die Herstellung mehrschichtiger Kunststoffe durch Koextrusion ist mit dem Nachteil verbunden, daß die unvermeidlich entstehenden Produktionsabfälle heterogen sind und nicht ohne weiteres für die Erzeugung einer der Schichten wiederverwendet werden können. Die Erfindung bietet nun die Möglichkeit, eine koextrudierte Bahn zu erzeugen, die auf der einen Seite eine verhältnismäß dünne Schicht aus einem Kunststoffmaterial mit einem so hohen Anteil an heterogen verteilten Körpern enthält, daß ihre freiliegende Oberfläche matt ist, und auf der anderen Seite eine ebenfalls dünne Deckschicht aus homogenem Kunststoff enthält. Dazwischen befindet sich die tragende Kernschicht. Zu ihrer Herstellung kann je nach den betrieblichen Gegebenheiten wahlweise ein reiner thermoplastischer Kunststoff oder dessen Gemisch mit wechselnden Anteilen von gemahlenem Abfallmaterial oder dieses allein verwendet werden. Das Erscheinungsbild der koextrudierten Bahn ist in allen Fällen das gleiche. Auch ihre technologischen Eigenschaften schwanken so wenig, daß die wechselnde Zusammensetzung keiner Berücksichtigung bedarf.

In jedem Fall enthält die extrudierte Bahn auf wenigstens einer Seite eine walzengeglättete Deckschicht, die durch die heterogen verteilten Körpern in der Kernschicht nicht gestört oder beeinflußt ist. Durch den Begriff "walzengeglättet" wird zum Ausdruck gebracht, daß die Oberfläche den Abdruck einer Glättwalze darstellt und dadurch entstanden ist, daß die Oberfläche der Kunststoffbahn in Berührung mit der Glättwalze vom thermoplastischen Zustand zum Glaszustand abgekühlt worden ist. Sie ist daher auch frei von den bei der Extrusion aus einer Schlitzdüse unvermeidbar auftretenden Ziehriefen und Rattermarken. Die erfindungsgemäße extrudierte Bahn hat den Vorzug, daß sowohl die Qualität der walzengeglätteten Oberfläche als auch die gegebenenfalls an der Oberfläche der Kernschicht bestehende Mattstruktur erhalten bleiben, wenn sie auf eine Temperatur im thermoelastischen Zustandsbereich erwärmt und ohne Einwirkung eines Formwerkzeugs wieder abgekühlt werden.

Da die Qualität der Bahnoberfläche nicht besser als die der Glättwalze sein kann, wird zum Glätten der Bahn eine hochglanzpolierte Glättwalze von hoher Qualität eingesetzt. Für die Bestimmung der Glätte können der Glanzwert nach DIN 67 530 und die Rauheitswerte nach DIN 4768 herangezogen werden. Vorzugsweise hat die walzengeglättete Oberfläche einen Glanzwert von mindestens 80 und wenigstens einen der folgenden Rauheitswerte:
Mittenrauheitswert $R_a$ unter 50 nm,
gemittelte Rauhtiefe $R_z$ unter 500 nm,
maximale Rauhtiefe $R_{max}$ unter 700 nm.

Die extrudierten Bahnen gemäß der Erfindung können bei geringen Dicken und ausreichender Elastizität in Rollenform und bei größeren Dicken und höherer Steifigkeit in Form von Tafeln gewünschter Länge in den Handel gebracht und weiterverarbeitet werden. Die Bahn- bzw. Plattenbreite liegt z.B. bei 500 bis 3000 mm.

Bevorzugte Produkte gemäß der Erfindung sind pigmentierte Bahnen oder Tafeln mit einseitiger oder beidseitiger transparenter Deckschicht. Die Deckschicht als solche tritt in der optischen Beschaffenheit kaum in Erscheinung. Jedoch zeichnet sich die mit der Deckschicht überzogene Seite durch eine hervorragende Brillanz und hohen Glanz aus, die mit einem pigmentierten Material allein nicht erreichbar wären. Der Unterschied zu einer homogen pigmentierten Bahn tritt umso deutlicher in Erscheinung, je stäker das Material bei der thermoelastischen Umformung zu einem dreidimensional geformten Körper gereckt wird. Es eignet sich aus diesem Grund hervorragend zur Herstellung von farbigen Sanitärteilen, wie Badewannen, Wasch- oder Duschbecken mit hochglänzenden Oberflächen.

Eine andere wichtige Ausführungsform der Erfindung ist eine Folie oder Platte mit einer mattierten und einer hochglänzenden Oberfläche. Vorzugsweise ist dieses Material farblos transparent und beispielsweise als Antireflexverglasung für Bilder geeignet. Die walzengeglättete Platte oder Folie kann beschriftet oder bedruckt werden, um reflexarme Hinweisschilder oder Verkehrszeichen u. dergl. herzustellen.

Das Koextrusionsverfahren

Das Verfahren zur Herstellung der extrudierten Bahn durch Extrusion eines Stranges K aus thermoplastischem Kunststoff mit einem Gehalt an heterogen verteilten unschmelzbaren oder ungeschmolzenen Körpern ist erfindungsgemäß dadurch gekennzeichnet, daß der thermoplastische Strang K mit wenigstens einem zweiten Strang D aus einem transparenten, homogenen, mit dem Kunststoff des Stranges K verträglichen thermoplastischen Kunststoff zu einem mehrschichtigen, aus aneinander haftenden Schichten bestehenden Schmelzestrang B zusammengeführt, in einer Extrusionsdüse zu einer ebenen mehrschichtigen Bahn geformt und koextrudiert wird, daß die koextrudierte Bahn wenigstens auf der Seite, auf der sich der transparente Strang D befindet, in einem Walzenglättwerk geglättet und unter die Erweichungstemperatur abgekühlt wird.

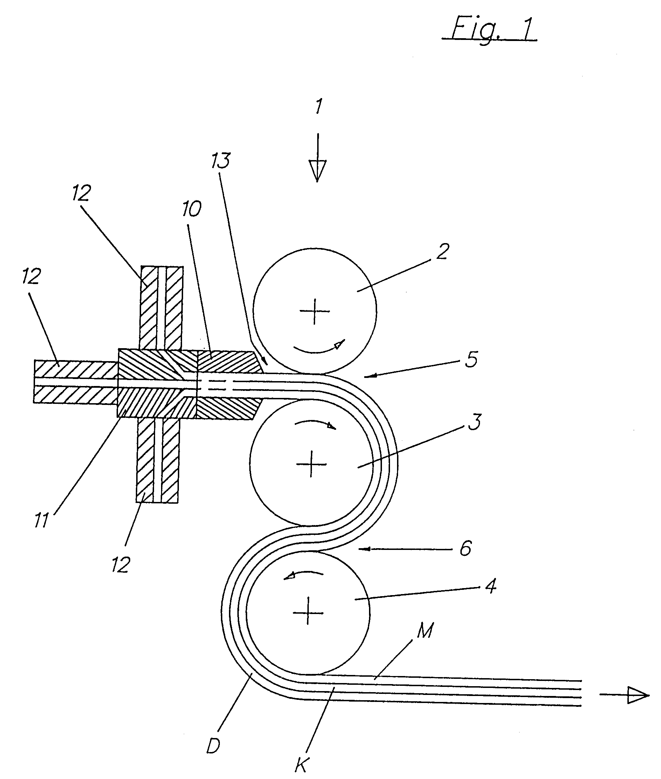

Das Verfahren kann auf einer konventionellen Mehrschicht-Extrusionsanlage mit angeschlossenem Glättwerk, wie in Figur 1 schematisch im Schnittbild dargestellt, durchgeführt werden. In die Schlitzdüse 10 wird aus einem Koextrusionsadapter 11 ein mehrschichtiger Strang eingeführt und auf die gewünschte Bahnbreite gedehnt. An den Koextrusionsadapter sind zwei oder mehr Extruder 12 zur Bildung der erforderlichen Stränge K, D und gegebenenfalls M angeschlossen. Dicht hinter der Schlitzdüse 11 tritt die extrudierte mehrschichtige Bahn 13 in das Walzenglättwerk 1 mit gekühlten Walzen 2, 3, 4 ein und wird dort in üblicher Weise unter die Erweichungstemperatur gekühlt.

Gemäß einer bevorzugten Verfahrensweise wird der thermoplastische Strang K wenigstens teilweise aus dem zerkleinerten Material eines zuvor erzeugten koextrudierten Stranges oder aus dabei entstandenem Abfallmaterial gebildet, das auf diese Weise ohne Nachteil für das Produkt kostengünstig wiederverwendet werden kann. Man geht beispielsweise so vor, daß zusammen mit dem Strang K als Kernstrang und dem transparenten Strang D als freiliegender Deckstrang auf einer Seite des Kernstranges ein zweiter Deckstrang M aus einem mit dem Kunststoff des Kernstranges verträglichen thermoplastischen Kunststoff auf der anderen Seites des Kernstranges K koextrudiert wird, wobei der Deckstrang M einen höheren Gehalt an den in dem Kernstrang enthaltenen heterogen verteilten Körpern enthält als der Kernstrang selbst. Als Deckstrang M kann ein thermoplastischer Kunststoff verwendet werden, worin der Gehalt an heterogen verteilten Körpern so hoch ist, daß seine freiliegende Oberfläche matt ist.

Zur Herstellung einer beidseitig walzengeglätteten Bahn wird der Kernstrang K beiderseits mit je einem transparenten Deckstrang D koextrudiert und werden die freiliegenden Oberflächen beider Deckstränge D an hochglanzpolierten Walzen des Walzenglättwerks geglättet.

Zur Herstellung einer einseitig geglätteten und auf der anderen Seite matten Bahn kann man die aus der Schlitzdüse extrudierte Bahn, die auf einer Seite eine stark mit unschmelzbaren Kunststoffteilchen angereicherte Schicht M enthält, in herkömmlicher Weise durch ein Walzenglättwerk 1 laufen lassen. Es enthält - wie in Fig. 1 dargestellt - üblicherweise drei gekühlte Glättwalzen 2, 3, 4. Die homogene Schicht D umschlingt nach dem Durchtritt durch den ersten Walzenspalt 5 die hochglanzpolierte Glättwalze 3, während die Schicht M nur kurzzeitig mit der Walze 2 in Berührung tritt und erst nach dem Durchtritt durch den zweiten Walzenspalt 6 die Walze 4 umschlingt. Bei dieser Arbeitsweise bleibt die Mattstruktur an der Oberfläche der Schicht M erhalten. Da ihre Glättung ohnehin nicht beabsichtigt ist, brauchen die Walzen 1 und 3 nicht hochglänzend zu sein, wenn auch ein herkömmliches Glättwerk mit polierten Walzen ohne Nachteil verwendet werden kann.

## Patentansprüche

1. Extrudierte Bahn aus thermoplastischem Kunststoff mit walzengeglätteter Oberfläche, enthaltend eine Kernschicht K aus thermoplastischem Kunststoff mit einem Gehalt an heterogen verteilten unschmelzbaren oder oberhalb der Schmelztemperatur des thermoplastischen Kunststoffs schmelzenden Körpern von einer Größe, die geringer als die Dicke der Kernschicht ist,

   gekennzeichnet

   durch wenigstens eine an die Kernschicht angrenzende freiliegende Deckschicht D aus einem transparenten, homogenen, mit dem Kunststoff der Kernschicht verträglichen thermoplastischen Kunststoff, deren freiliegende Oberfläche walzengeglättet ist.

2. Extrudierte Bahn nach Anspruch 1, gekennzeichnet durch eines oder mehrere der folgenden Merkmale:
   a) die Kernschicht K enthält den gleichen thermoplastischen Kunststoff wie die transparente Deckschicht D,
   b) der thermoplastische Kunststoff der transparenten Deckschicht D ist Polymethylmethacrylat,
   c) der thermoplastische Kunststoff der Kernschicht K ist Polymethylmethacrylat,
   d) die geglättete Oberfläche der transparenten Deckschicht D hat einen Glanz von mindestens 80 nach DIN 67530,
   e) die geglättete Oberfläche der transparenten Deckschicht D hat Mittenrauhheitswerte $R_a$ unter 50 nm oder eine gemittelte Rauhtiefe $R_z$ unter 500 nm oder eine maximale Rauhtiefe $R_{max}$ unter 700 nm nach DIN 4768,
   f) die Kernschicht K hat eine Dicke von 0,5 bis 20 mm,
   g) die transparente Deckschicht D ist dünner als die Kernschicht K und hat eine Dikke von wenigstens 10 Mikrometer.

3. Extrudierte Bahn nach Anspruch 1 oder 2, dadurch gekennzeichnet, daß die heterogen verteilten Körper eines oder mehrere der folgenden Merkmale erfüllen:

h) die Kernschicht K enthält 0,01 bis 70 Gew.-% der heterogen verteilten Körper,

i) sie haben überwiegend eine Größe zwischen 1 und 150 Mikrometer;

j) sie bestehen wenigstens zum Teil aus einem organischen oder anorganischen Pigment oder Füllstoff,

k) sie bestehen wenigstens zum Teil aus einem teilchenförmigen vernetzten Kunststoff, z.B. einem Perlpolymerisat, Emulsionspolymerisat oder zerkleinerten Substanzpolymerisat,

l) sie bestehen wenigstens zum Teil aus Teilchen eines Polymerisats mit einem Molekulargewicht von mindestens 1 Million,

m) sie haben wenigstens zum Teil einen von dem des Kernmaterials abweichenden optischen Brechungsindex.

4. Extrudierte Bahn nach einem oder mehreren der Ansprüche 1 bis 3, gekennzeichnet durch je eine transparente Deckschicht D auf beiden Seiten der Kernschicht.

5. Extrudierte Bahn nach einem oder mehreren der Ansprüche 1 bis 3, gekennzeichnet durch eine an die Kernschicht K angrenzende weitere Deckschicht M aus einem mit dem Kunststoff der Kernschicht verträglichen thermoplastischen Kunststoff mit einem höheren Gehalt an den in der Kernschicht enthaltenen heterogen verteilten Körpern als in der Kernschicht selbst.

6. Extrudierte Bahn nach Anspruch 5, dadurch gekennzeichnet, daß der Gehalt an heterogen verteilten Körpern in der weiteren Deckschicht M so hoch ist, daß ihre freiliegende Oberfläche matt ist.

7. Dreidimensionaler Körper, hergestellt durch thermisches Umformen einer extrudierten Bahn nach einem oder mehreren der Ansprüche 1 bis 6 unter teilweiser Reckung.

8. Dreidimensionaler Körper gemäß Anspruch 7 in Gestalt eines Sanitärteils, wie einer Badewanne oder eines Wasch- oder Duschbeckens.

*Fig. 1*